# EUROPÄISCHE PATENTSCHRIFT

(11) **EP 3 252 338 B1**
(45) Veröffentlichungstag und Bekanntmachung des Hinweises auf die Patenterteilung: **10.04.2019**
(21) Anmeldenummer: 17170693.0
(22) Anmeldetag: 11.05.2017
(51) Int. Cl.: F16F 9/46, B60N 2/52, F16F 9/06

(54) **DÄMPFER**
DAMPER
AMORTISSEUR

(30) Priorität: 03.06.2016 DE 102016209826
(43) Veröffentlichungstag der Anmeldung: 06.12.2017
(60) Teilanmeldung: 18190018.4
(73) Patentinhaber: SUSPA GmbH, 90518 Altdorf (DE)
(72) Erfinder: Böhrer, Andreas, 92318 Neumarkt (DE); Stephan, Florian, 91074 Herzogenaurach (DE)
(74) Vertreter: Rau, Schneck & Hübner Patentanwälte Rechtsanwälte PartGmbB

(56) Entgegenhaltungen:
- DE-B3-102010 006 117
- JP-A- S5 894 650
- US-A- 4 313 529
- US-A1- 2005 217 953

## Beschreibung

Der Inhalt der deutschen Patentanmeldung DE 10 2016 209 826.8 wird durch Bezugnahme hierin aufgenommen.

Die Erfindung betrifft einen Dämpfer.

Ein Dämpfer ist aus der DE 10 2010 029 180 A1, US 4,313,529 A, der DE 10 2010 006 117 B3, der JP S5894650 A und der US 2005/217953 A1 bekannt.

Es ist die Aufgabe der vorliegenden Erfindung, einen Dämpfer derart weiterzuentwickeln, dass die Einstellbarkeit einer Dämpfungswirkung des Dämpfers verbessert ist.

Diese Aufgabe ist erfindungsgemäß gelöst durch einen Dämpfer mit den in Anspruch 1 angegebenen Merkmalen.

Erfindungsgemäß wurde erkannt, dass eine Verstelleinheit zum Verstellen einer Dämpfungskraft eines Dämpfers einen Verstellaktor aufweist, der außerhalb eines Gehäuses des Dämpfers angeordnet ist. Die Verstelleinheit weist ferner ein Verstellelement zum Verstellen der effektiven Strömungsquerschnittsfläche eines Durchströmkanals sowie eine Kraftübertragungsvorrichtung zum Übertragen einer vom Verstellaktor bereitgestellten Stellkraft auf das Verstellelement auf. Mit dem Verstellaktor kann eine Anordnung des Verstellelements und einer Kolbenstange automatisiert verstellt werden. Die Kolbenstange ist Bestandteil einer Kolben-Einheit. Die Kolbenstange weist eine Längsachse auf. An der Kolbenstange ist ein Kolben befestigt, der einen Arbeitsraum des Gehäuses, in dem sich Dämpfungsfluid befindet, in einen ersten Teil-Arbeitsraum und in einen zweiten Teil-Arbeitsraum unterteilt. Der Durchströmkanal verbindet den ersten mit dem zweiten Teil-Arbeitsraum. Das Verstellelement ist insbesondere innerhalb des Dämpfers, insbesondere innerhalb des Dämpfergehäuses, insbesondere innerhalb der Kolbenstange angeordnet. Das Verstellelement kann als Blende ausgeführt sein, die Durchströmöffnungen zumindest anteilig oder teilweise verdeckt beziehungsweise freigibt. Das Verstellelement kann auch als Steuerstange, Kegelventil oder Nadelventil ausgeführt sein. Wesentlich ist, dass der Verstellaktor räumlich getrennt von dem Verstellelement angeordnet ist. Der Dämpfer selbst, insbesondere das Gehäuse, kann kleinbauend und unkompliziert ausgeführt sein. Insbesondere können bereits existierende Dämpfer, die ohne Verstellaktor ausgeführt sind, zu einem erfindungsgemäßen Dämpfer nachgerüstet werden. Durch die Funktionstrennung von Verstellaktor und Verstellelement sind verschiedene Antriebskonzepte für den Verstellaktor möglich, um eine erforderliche Stellkraft bereitzustellen. Beispielsweise sind elektrische, hydraulische oder pneumatische Verstellaktoren möglich. In Abhängigkeit der Ausführung des Verstellelements ermöglicht die Kraftübertragungsvorrichtung eine geeignete Übertragung der Stellkraft in eine Verstellbewegung des Verstellelements. Als Kraftübertragungsvorrichtungen können beispielsweise ein Spindelantrieb, ein Linearmotor, ein Elektromagnet, ein Drehmagnet, ein Pneumatikzylinder oder ein Hydraulikzylinder dienen. Außerhalb des Gehäuses bedeutet, dass der Verstellaktor auch nicht anteilig innerhalb des Gehäuses angeordnet ist. Der Verstellaktor ist insbesondere beabstandet vom Gehäuse am Dämpfer angeordnet. Es ist denkbar, dass der Verstellaktor an einer Außenseite des Gehäuses unmittelbar oder mittels zusätzlicher Befestigungselemente befestigt ist. Der Verstellaktor kann auch beabstandet vom Gehäuse angeordnet sein.

Der Dämpfer, bei dem die Kraftübertragungsvorrichtung eine Verzahnung aufweist, die mit der Gegenverzahnung des Verstellelements korrespondiert, ist besonders kompakt ausgeführt.

Der Dämpfer, bei dem die Gegenverzahnung an einem Gegenzahnrad ausgeführt ist, wobei das Gegenzahnrad drehfest mit der Kolbenstange verbunden ist, ermöglicht die unmittelbare Kraftübertragung auf die Kolbenstange. Die Kolbenstange wird unmittelbar von dem Verstellelement angetrieben.

Eine Steuerungseinheit gemäß Anspruch 2 gewährleistet eine gezielte Einstellung der Dämpfungswirkung. Die Steuerungseinheit steht insbesondere mit der Verstelleinheit in Signalverbindung.

Eine relative Drehbarkeit gemäß Anspruch 3 ermöglicht eine unmittelbare Beeinflussung der Dämpfungskraft.

Die Drehbarkeit des Verstellelements gemäß Anspruch 4 erfordert einen reduzierten Nachrüstaufwand.

Eine Drehbarkeit der Kolbenstange gemäß Anspruch 5 ermöglicht eine vereinfachte Drehübertragung auf die Kolbenstange.

Ein Verstellhebel gemäß Anspruch 6 ermöglicht eine vereinfachte Kopplung des Verstellaktors über die Kraftübertragungsvorrichtung mit dem Verstellelement.

Eine Anlenkung gemäß Anspruch 7 ermöglicht eine verbesserte Kraftübertragung.

Ein Drehantrieb gemäß Anspruch 10 ermöglicht eine unkomplizierte und unmittelbare Bereitstellung der Stellkraft.

Ein Dämpfer mit einem Zahnrad gemäß Anspruch 11 ist besonders robust ausgeführt.

Eine Zahnstange mit einer Gegenverzahnung kann mit dem Verstellelement gekoppelt sein. Die Zahnstange kann insbesondere mit dem Verstellhebel gekoppelt sein. Die Zahnstange kann mit dem Verstellelement insbesondere unmittelbar gekoppelt sein. Die Zahnstange vereinfacht die Nachrüstung des Dämpfers. Insbesondere ist die Zahnstange derart ausgeführt, dass sie mit einem Verstellhebel eines Verstellelements zusammenwirken kann.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Darstellung eines Dämpfers gemäß einem nicht erfindungsgemäßen Ausführungsbeispiel, bei dem eine Kraftübertragungsvorrichtung einen Bowdenzug aufweist,
- Fig. 2: eine vergrößerte Detaildarstellung des Details II in Fig. 1,
- Fig. 3: einen Längsschnitt gemäß Schnittlinie III-III in Fig. 1 bei einer Betätigung in Einschubrichtung,
- Fig. 4: ein Fig. 3 entsprechender Längsschnitt bei einer Betätigung des Dämpfers in Ausschubrichtung,

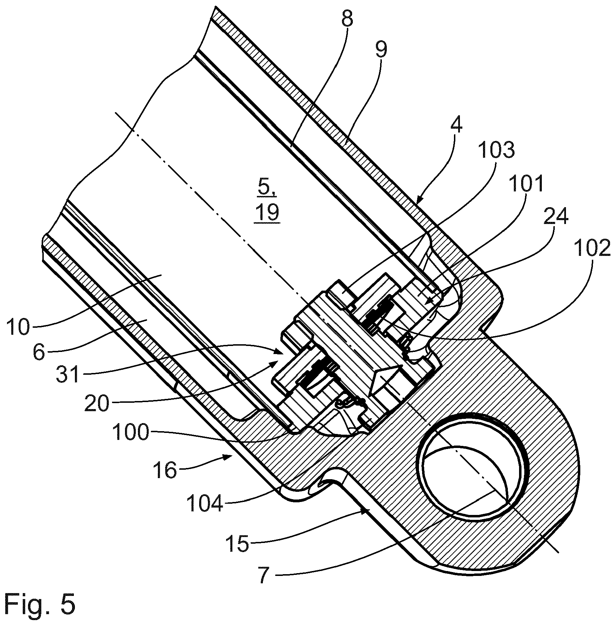

- Fig. 5: eine Fig. 3 entsprechende, vergrößerte Detaildarstellung des Unterteils des Dämpfergehäuses gemäß einer weiteren Ausführung,
- Fig. 6: eine perspektivische Detaildarstellung eines Dämpfers gemäß einem weiteren nicht erfindungsgemäßen Ausführungsbeispiel, bei dem die Kraftübertragungsvorrichtung ein Zahnrad und eine Zahnstange umfasst,
- Fig. 7: eine Fig. 6 entsprechende Darstellung eines Dämpfers gemäß einem erfindungsgemäßen Ausführungsbeispiel, bei dem die Kraftübertragungsvorrichtung ein Zahnrad und ein unmittelbar mit der Verstelleinheit gekoppeltes Gegenzahnrad aufweist,
- Fig. 8: eine Fig. 2 entsprechende, vergrößerte Darstellung eines Dämpfers gemäß einem weiteren nicht erfindungsgemäßen Ausführungsbeispiel, bei dem die Kraftübertragungsvorrichtung ein stabförmiges Verbindungselement umfasst,
- Fig. 9: eine Fig. 8 entsprechende Darstellung eines Dämpfers gemäß einem weiteren nicht erfindungsgemäßen Ausführungsbeispiel, bei dem die Kraftübertragungsvorrichtung unmittelbar am Verstellaktor und an der Verstelleinheit angelenkt ist,
- Fig. 10: eine perspektivische Darstellung eines Dämpfers gemäß einem weiteren erfindungsgemäßen Ausführungsbeispiel, bei dem die Kolbenstange mittels eines daran befestigten Gegenzahnrads drehbar antreibbar ist,
- Fig. 11: eine Fig. 10 entsprechende Darstellung eines Dämpfers gemäß einem weiteren nicht erfindungsgemäßen Ausführungsbeispiel, bei dem die Kolbenstange mittels eines Exzenterelements und eines Verbindungselements drehbar antreibbar ist,
- Fig. 12: eine perspektivische, teilgeschnittene Darstellung eines Dämpfers gemäß einem weiteren erfindungsgemäßen Ausführungsbeispiels, bei dem eine Motor-/Getriebe-Kombination an dem ersten Befestigungs-Element gehalten ist,
- Fig. 13: eine Fig. 12 entsprechende Darstellung eines Dämpfers gemäß einem weiteren nicht erfindungsgemäßen Ausführungsbeispiel, bei dem der Verstellhebel mittels eines Mehrgelenk-Scharniers an der Motor-/Getriebe-Einheit angelenkt ist.

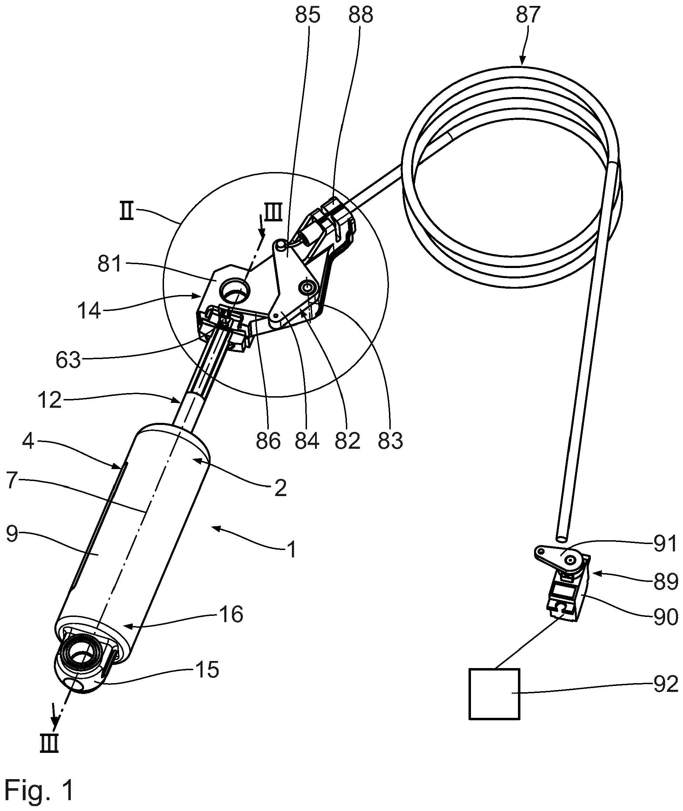

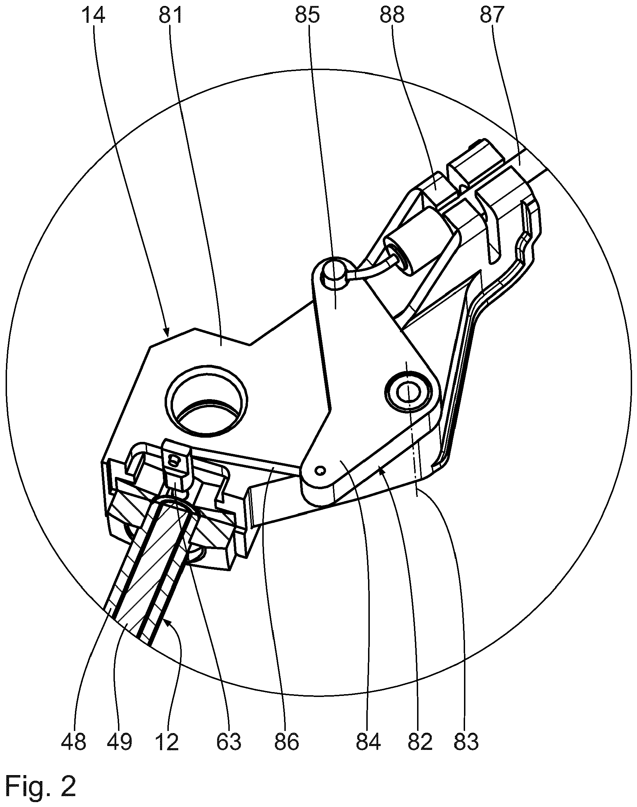

Im Folgenden wird unter Bezugnahme auf die Fig. 1 bis 4 ein nicht erfindungsgemäßes Ausführungsbeispiel beschrieben. Ein Dämpfer 1 weist ein Gehäuse 4 mit einem ersten Gehäuse-Ende 2 und einem zweiten Gehäuse-Ende 16 auf. Das Gehäuse 4 ist am ersten Gehäuse-Ende 2 durch eine Führungs- und Dichtungs-Einheit 3 abgeschlossen. Am zweiten Gehäuse-Ende 16 weist das Gehäuse 4 ein zweites Befestigungs-Element 15 auf. Das Gehäuse 4 umschließt einen Arbeitsraum 5 und einen Ausgleichsraum 6. Das Gehäuse 4 weist eine Längsachse 7 auf. Es ist insbesondere zumindest abschnittsweise rotationssymmetrisch zur Längsachse 7 ausgebildet. Das Gehäuse 4 kann doppelwandig ausgebildet sein. Es umfasst insbesondere ein inneres Gehäuse 8 und ein äußeres Gehäuse 9. Das äußere Gehäuse 9 umgibt das innere Gehäuse 8. Das äußere Gehäuse 9 kann insbesondere konzentrisch zum inneren Gehäuse 8 angeordnet sein. Der Ausgleichsraum 6 ist somit als ringzylinderförmiger Hohlraum ausgebildet.

In einer alternativen, in den Figuren nicht dargestellten Variante, kann das äußere Gehäuse 9 auch derart versetzt zum inneren Gehäuse 8 angeordnet sein, dass der Ausgleichsraum 6 entlang seines Umfangs eine variable, das heißt nicht konstante Breite aufweist. In diesem Fall kann der Ausgleichsraum 6 insbesondere topologisch zusammenziehbar ausgebildet sein.

Der Arbeitstraum 5 ist mit einem Dämpfungsfluid 10 gefüllt. Beim Dämpfungsfluid 10 handelt es sich insbesondere um ein hydraulisches Öl. Der Ausgleichsraum 6 ist teilweise mit dem Dämpfungsfluid 10 gefüllt. Der Rest des Ausgleichsraums 6 ist mit Gas, insbesondere mit Luft gefüllt.

Die Führungs- und Dichtungseinheit 3 umfasst ein erstes Dichtungs-Element 41, welches abgedichtet an der Kolbenstange 12 anliegt. Zur Halterung auf der Kolbenstange 12 weist das erste Dichtungs-Element 41 eine Ringnut 42 auf, in welcher ein Spannring 43 angeordnet ist. Des Weiteren umfasst die Führungs- und Dichtungseinheit 3 ein nach außen gegen das äußere Gehäuse 9 abgestütztes Stütz-Element 44. Das Stütz-Element 44 ist mittels eines Dichtungsrings 45 gegen das äußere Gehäuse 9 abgedichtet gelagert. Es weist ein zentrales Sackloch 46 auf. Die Führungs- und Dichtungseinheit 3 weist eine zentrale Bohrung 47 auf. Die Bohrung 47 ist insbesondere konzentrisch zur Längsachse 7 angeordnet. Durch die Bohrung 47 ist die Kolbenstange 12 geführt.

Außerdem umfasst der Dämpfer 1 eine Kolben-Einheit 11 mit einer Kolbenstange 12 und einem Kolben 13. Der Kolben 13 ist an der Kolbenstange 12 befestigt und in dem inneren Gehäuse 8 entlang der Längsachse 7 verschiebbar geführt. Die Kolbenstange 12 ist durch die Führungs- und Dichtungs-Einheit 3 abgedichtet aus dem Gehäuse 4 herausgeführt. An ihrem dem Kolben 13 entgegengesetzten Ende ist die Kolbenstange 12 mit einem ersten Befestigungs-Element 14 verbunden. Das erste Befestigungs-Element 14 ist in Form einer Querbohrung in einer Montageplatte 81 ausgeführt. Die Montageplatte 81 ist fest mit der Kolbenstange 12 verbunden. Die Montageplatte 81 ist dämpferfest, insbesondere kolbenstangenfest, angeordnet.

Der Kolben 13 unterteilt den Arbeitsraum 5 in einen dem ersten Gehäuse-Ende 2 zugewandten ersten Teil-Arbeitstraum 17 mit einem ersten Arbeitsraum-Ende 18 und einem dem zweiten Gehäuse-Ende 16 zugewandten zweiten Teil-Arbeitsraum 19 mit einem zweiten Arbeitsraum-Ende 20.

Am ersten Arbeitsraum-Ende 18 ist ein erstes Abschluss-Element 21 angeordnet. Das erste Abschluss-Element 21 ist im inneren Gehäuse 8 angeordnet. Das erste Abschluss-Element 21 kann insbesondere in das innere Gehäuse 8 eingesteckt, vorzugsweise eingepresst oder eingeschraubt sein. Es ist gegenüber dem inneren Gehäuse 8 mittels eines Dichtungsrings 22 abgedichtet. Das erste Abschluss-Element 21 ist einteilig mit dem Stütz-Element 44 ausgebildet. Es ist somit ebenfalls ein Bestandteil der Führungs- und Dichtungseinheit 3. Prinzipiell ist es jedoch auch denkbar, das erste Abschluss-Element 21 und das Stütz-Element 44 als separate Teile auszubilden.

Das erste Abschluss-Element weist einen ersten Ausgleichskanal 23 auf, welcher eine in den Figuren durch Pfeile angedeutete Durchström-Verbindung zwischen dem ersten Teil-Arbeitsraum 17 und dem Ausgleichsraum 6 bildet. Für weitere Details bezüglich Ausführungsformen des ersten Abschluss-Elements 21 sei auf die DE 10 2005 023 756 A1 verwiesen.

Am zweiten Arbeitsraum-Ende 20 ist ein zweites Abschluss-Element 24 angeordnet. Das zweite Abschluss-Element 24 ist im inneren Gehäuse 8 angeordnet. Das zweite Abschluss-Element 24 kann insbesondere in das innere Gehäuse 8 eingesteckt, vorzugsweise eingepresst sein. Das zweite Abschluss-Element 24 kann im Bereich des zweiten Arbeitsraum-Endes 20 von einer umlaufenden Sicke 27 im inneren Gehäuse 8 gehalten sein. Zur Verbesserung des Halts des zweiten Abschluss-Elements 24 kann die Sicke 27 durch einen Spannring 28 verstärkt sein. Außerdem kann das innere Gehäuse 8 im Bereich des zweiten Arbeitsraum-Endes 20, insbesondere im Bereich der Sicke 27, umfangsseitig bereichsweise am äußeren Gehäuse 9 anliegen. Das äußere Gehäuse 9 weist hierfür stufenförmige Verstärkungen 29 auf, an welchen eine Anlageschulter 30 des inneren Gehäuses 8 formschlüssig anliegt.

Das zweite Abschluss-Element 24 kann gegenüber dem inneren Gehäuse 8 mittels eines Dichtungsrings 25 abgedichtet sein. Es weist einen zweiten Ausgleichskanal 26 auf, welcher eine Durchström-Verbindung zwischen dem zweiten Teil-Arbeitsraum 19 und dem Ausgleichsraum 6 bildet.

Für eine ordnungsgemäße Funktion des Dämpfers 1 sollte der Arbeitsraum 5 stets vollständig mit Dämpfungsfluid 10 gefüllt sein. Dies kann durch eine geeignete Ausbildung und Anordnung des zweiten Ausgleichskanals 26 sowie eine an das Volumen des Arbeitsraums 5 und die Ausbildung des Ausgleichsraums 6 angepasste Menge an Dämpfungsfluid 10 erreicht werden. Der Dämpfer 1 weist insbesondere eine bevorzugte Einbaulage derart auf, dass die Ausschub-Richtung 40 der Richtung der Schwerkraft entgegengesetzt ist. Die ordnungsgemäße Funktion des Dämpfers 1 kann dann bis zu einem Verdrehwinkel von mindestens 77 ° aus der bevorzugten Einbaulage gewährleistet sein.

Im zweiten Ausgleichskanal 26 ist ein Ausgleichs-Ventil 31 vorgesehen. Das Ausgleichs-Ventil 31 umfasst insbesondere einen Ventilstift 32, welcher mittels einer konisch zulaufenden Ventil-Schraubenfeder 33 gegen das zweite Abschluss-Element 24 vorgespannt ist. Die Ventil-Schraubenfeder 33 liegt hierzu an einem Ventilstift-Anschlag 34 an. Der Ventilstift 32 ist in einer Bohrung 35 im zweiten Abschluss-Element 24 geführt. Die Bohrung 35 ist insbesondere konzentrisch zur Längsachse 7 angeordnet. Außerdem umfasst das Ausgleichs-Ventil 31 eine auf dem Ventilstift 32 angeordnete, mehrkantige Ventil-Mutter 36. Die Ventil-Mutter 36 bildet einen weiteren Anschlag, gegen den eine auf dem Ventilstift 32 angeordnete Distanzscheibe 37 anliegt. An die Distanzscheibe 37 anliegend ist eine Ventil-Tellerfeder 38 und eine Ventilscheibe 39 angeordnet.

Das Ausgleichs-Ventil 31 ist als selbsttätiges Ventil ausgebildet. Es kann als Einweg-Ventil ausgebildet sein. Es ist insbesondere derart ausgebildet, dass es eine Strömung vom Ausgleichsraum 6 durch den zweiten Ausgleichskanal 26 in den zweiten Teil-Arbeitsraum 19 ermöglicht. Mit anderen Worten ist das Ausgleichs-Ventil 31 derartig ausgebildet, dass es bei einer Bewegung des Kolbens 13 in einer Ausschub-Richtung 40 parallel zur Richtung der Längsachse 7 öffnet.

Bei dem in den Fig. 1 bis 4 dargestellten Ausführungsbeispiel ist das Ausgleichs-Ventil 31 derart ausgebildet, dass es eine bidirektionale Strömung durch den zweiten Ausgleichskanal 26 ermöglicht. Es ist somit als Zweiweg-Ventil ausgebildet. Das Ausgleichs-Ventil 31 kann insbesondere Prägungen aufweisen, welche unabhängig von der Stellung der Ventilscheibe 39 einem bidirektionalen Durchfluss zwischen dem zweiten Teil-Arbeitsraum 19 und dem Ausgleichsraum 6 ermöglichen.

Allgemein ist vorgesehen, dass das Ausgleichs-Ventil 31 ein Überlast-Schutz-Element bildet, welches bei Überschreiten einer vorbestimmten Grenzkraft in Richtung der Längsachse 7 auf die Kolbenstange 12 ein Geöffnetsein des zweiten Ausgleichskanals 26 sicherstellt. Die Aktivierungscharakteristik dieses Überlast-Schutzes kann durch geeignete Auswahl und Dimensionierung der Ventil-Schraubenfeder 33 und der Ventil-Tellerfeder 38 auf einfache Weise erreicht werden.

Ein alternativer konstruktiver Aufbau des Ausgleichs-Ventils 31 ist denkbar. Bezüglich weiterer Details des Ausgleichs-Ventils 31 sei auf die DE 10 2005 023 756 A1, insbesondere Abs. [0022], verwiesen.

Die Kolbenstange 12 ist mehrteilig, insbesondere zweiteilig ausgebildet. Sie umfasst eine äußere, rohrförmig ausgebildete Kolbenstangen-Hülse 48 und einen Kolbenstangen-Kern 49.

Die Kolbenstangen-Hülse 48 kann mit dem ersten Befestigungs-Element 14 verbunden sein. Das erste Befestigungs-Element 14 weist eine konzentrisch zur Längsachse 7 angeordnete Übergangspassung 66 auf, mit der das erste Befestigungs-Element auf eine Außenseite der Kolbenstange 12, insbesondere der Kolbenstangen-Hülse 48, aufgesteckt ist. Das erste Befestigungs-Element 14 ist mit der Kolbenstange 12 durch eine Verschweißung 67 verbunden.

Das erste Befestigungs-Element 14 kann alternativ ein Innengewinde aufweisen, mittels welchem das erste Befestigungs-Element 14 auf ein dazu passendes Außengewinde auf der Kolbenstangen-Hülse 48 aufgeschraubt ist.

Der Kolbenstangen-Kern 49 ist mittels eines Dichtungsrings 61 gegen die Kolbenstangen-Hülse 48 abgedichtet. Der Dichtungsring 61 ist in einer ringförmigen Nut 68 am Kolbenstangen-Kern 49 angeordnet. Im Bereich des Dichtungsrings 61 ist die Kolbenstangen-Hülse 48 nach innen, das heißt radial zur Längsachse 7, verstärkt ausgebildet. Sie weist hier eine Verstärkung 62 auf. Abgesehen von der Nut 68 ist der Kolbenstangen-Kern 49 im Bereich der Verstärkung 62 vollzylindrisch ausgebildet. Im Bereich der Verstärkung 62 liegt der Kolbenstangen-Kern 49 formschlüssig an der Kolbenstangen-Hülse 48 an. Er ist hierdurch in Radialrichtung spielfrei in der Kolbenstangen-Hülse 48 gelagert.

Der Kolbenstangen-Kern 49 weist insbesondere im Bereich der Verstärkung 62 einen kreisförmigen Querschnitt auf. Er ist somit zumindest in diesem Bereich vollzylindrisch ausgebildet.

In einem sich an diesen Bereich gegen die Ausschub-Richtung 40 anschließenden End-Bereich 69 weist der Kolbenstangen-Kern 49 eine Ausnehmung 70 auf. Die Ausnehmung 70 ist in Richtung senkrecht zur Längsachse 7 kreissegmentförmig ausgebildet. Sie weist einen Mittelpunktswinkel auf. Der Mittelpunktswinkel beträgt mindestens 15 °, insbesondere mindestens 30 °, insbesondere mindestens 45 °, insbesondere mindestens 60 °, insbesondere mindestens 90 °. Er kann insbesondere auch 120 ° betragen. Als Obergrenze für den Mittelpunktswinkel b sind höchstens 270 °, insbesondere höchstens 180 °, vorgesehen. Prinzipiell ist auch eine kreissektorförmige Ausbildung der Ausnehmung 70 möglich. Die Ausnehmung kann auch als Bohrung im Kolbenstangen-Kern 49 ausgebildet sein.

Der Kolbenstangen-Kern 49 ist Verstellelement, das in Form einer Blende ausgeführt ist. Das Verstellelement 49, ein Verstellaktor 89 und eine Kraftübertragungsvorrichtung 87 bilden eine Verstelleinheit.

Die Verstelleinheit ist über den Verstellaktor 89 mit einer in Fig. 1 rein schematisch dargestellten Steuerungseinheit 92 in Signalverbindung. Die Steuerungseinheit 92 kann auch in den Verstellaktor 89 integriert ausgeführt sein.

Die Ausnehmung 70 ist Teil eines Durchströmkanals 71, welcher eine Durchströmverbindung zwischen den Teil-Arbeitsräumen 17, 19 bildet. Zusätzlich zur Ausnehmung 70 umfasst der Durchströmkanal 71 mehrere Bohrungen 72 in der Kolbenstangen-Hülse 48. Mit anderen Worten bilden die Bohrungen 72 zusammen mit der Ausnehmung 70 den Durchströmkanal 71. Der Durchströmkanal 71 ist somit in der Kolbenstange 12 angeordnet. In Abhängigkeit der Drehposition des Kolbenstangen-Kerns 49 gegenüber der Längsachse 7 ist festgelegt, wie viele beziehungsweise welche der Bohrungen 72 von der Ausnehmung 70 freigegeben beziehungsweise abgedeckt sind. Dadurch ergibt sich eine effektive Strömungsquerschnittsfläche des Durchströmkanals 71.

Es ist mindestens eine Bohrung 72 in der Kolbenstangen-Hülse 48 vorgesehen. In dem in den Fig. 1 bis 4 dargestellten Ausführungsbeispiel weist die Kolbenstangen-Hülse 48 zwei Bohrungen 72 auf. Sie kann auch drei, vier, fünf oder mehr Bohrungen 72 aufweisen. Die Bohrungen 72 sind jeweils in Umfangsrichtung versetzt zueinander angeordnet. Die Bohrungen 72 weisen alle dieselbe Größe auf. Unterschiedlich große Bohrungen 72 sind jedoch ebenfalls denkbar.

Alternativ zu mehreren, diskreten Bohrungen 72 kann die Kolbenstangen-Hülse 48 auch eine länglich ausgebildete Durchström-Öffnung aufweisen. Die Durchström-Öffnung erstreckt sich vorzugsweise in Umfangsrichtung. Sie überdeckt einen Winkelbereich, welcher höchstens so groß ist wie der Mittelpunktswinkel der Ausnehmung 70 in dem Kolbenstangen-Kern 49. Mittels des End-Bereichs 69 des Kolbenstangen-Kerns 49 sind die Bohrungen 72 selektiv verschließbar. Der End-Bereich 69 des Kolbenstangen-Kerns 49 bildet somit ein Verstellelement, mittels welchem der effektive Strömungs-Querschnitt des Durchströmkanals 71 verstellbar ist. Das Verstellelement zur Verstellung des effektiven Strömungs-Querschnitts des Durchströmkanals 71 ist somit im Inneren der Kolbenstange 12, insbesondere im Inneren der Kolbenstangen-Hülse 48, angeordnet.

Mittels des Verstellelements ist der Durchströmkanal 71 zur Unterbrechung der Durchström-Verbindung zwischen den Teil-Arbeitsräumen 17, 19 insbesondere verschließbar. Hierdurch ist der Dämpfer 1 blockierbar.

Mehrere diskrete Bohrungen 72 ermöglichen mehrere, unterschiedliche, diskrete Dämpfungs-Einstellungen des Dämpfers 1. Der Dämpfer 1 kann somit eine stufenförmige Dämpfungs-Kennlinie aufweisen. Durch eine vorteilhafte Anordnung der Bohrungen 72 ist es möglich, ein kontinuierlich verstellbares Dämpfungs-Verhalten des Dämpfers 1 zu ermöglichen, indem beispielsweise die Bohrungen 72 entlang einer Betätigungsrichtung des Verstellelements 102 zumindest teilweise überlappend angeordnet sind. Die Verstellrichtung des Verstellelements 102 ist axial und/oder tangential zur Längsachse 7 orientiert. Ebenso ermöglicht eine längliche Öffnung in der Kolbenstangen-Hülse 48 ein kontinuierlich verstellbares Dämpfungs-Verhalten des Dämpfers 1.

Der Kolbenstangen-Kern 49 ist gegen die Kolbenstangen-Hülse 48 verlagerbar, insbesondere verdrehbar. Er ist hierfür mit einem Verstellhebel 63 verbunden. Der Verstellhebel 63 ist im Bereich des ersten BefestigungsElements 14 mit dem Kolbenstangen-Kern 49 verbunden. Das erste Befestigungs-Element 14 weist hierfür eine Aussparung 64 auf. Der Verstellhebel 63 ist insbesondere in einer Bohrung 65 im Kolbenstangen-Kern 49 angeordnet. Die Bohrung 65 verläuft senkrecht zur Längsachse 7. Der Verstellhebel 63 ist in die Bohrung 65 eingepresst. Es kann alternativ vorgesehen sein, den Verstellhebel 63 mit einem Außengewinde und die Bohrung 65 mit einem dazu passenden Innengewinde zu versehen. Der Verstellhebel 63 kann insbesondere in den Kolbenstangen-Kern 49 eingeschraubt sein. Dies ermöglicht eine besonders einfache Montage. Darüber hinaus wird hierdurch eine einfache Austauschbarkeit des Verstellhebels 63 sowie des Kolbenstangen-Kerns 49 ermöglicht. Es ist auch denkbar, den Kolbenstangen-Kern 49 gegen die Kolbenstangen-Hülse 48 verschiebbar auszubilden.

Der Verstellhebel 63 kann in Richtung der Längsachse 7 an der Kolbenstangen-Hülse 48 anliegen. Er fixiert somit den Kolbenstangen-Kern 49 gegen ein unbeabsichtigtes Verschieben relativ zur Kolbenstangen-Hülse 48 gegen die Ausschub-Richtung 40. Eine Fixierung des Kolbenstangen-Kerns 49 in der Kolbenstangen-Hülse 48 gegen eine Verschiebung bezüglich der Längsachse 7 kann auch mit alternativen, separaten FixierungsMitteln erreicht werden.

An der Montageplatte 81 ist ein Schwenkhebel 82 um eine Schwenkachse 83 schwenkbar angelenkt. Der Schwenkhebel 82 ist im Wesentlichen L-förmig ausgeführt mit einem ersten Hebelarm 84 und einem zweiten Hebelarm 85. Die Hebelarme 84, 85 schneiden sich im Scheitel des Schwenkhebels 82. Die Schwenkachse 83 verläuft durch den Scheitel des Schwenkhebels 82.

An einem freien Ende des ersten Hebelarms 84, das der Schwenkachse 83 gegenüberliegend angeordnet ist, ist ein Verbindungselement 86 angelenkt, das an dem Verstellhebel 63 angreift.

Die Schwenkbarkeit des Schwenkhebels 82 um die Schwenkachse 83 ist insbesondere federgelagert ausgeführt, wobei die Darstellung gemäß Fig. 1 den Schwenkhebel 82 in einer Ausgangsanordnung zeigt. Bei einer Betätigung eines Zugelements in Form eines Bowdenzugs 87 wird der innenliegende Draht des Bowdenzugs aus der äußeren Hülle ausgefahren und damit der Schwenkhebel 82, insbesondere der zweite Hebelarm 85, gegenüber der Schenkachse 83 im Gegenuhrzeigersinn gedreht. Der erste Hebelarm 84 wird entsprechend im Gegenuhrzeigersinn um die Schwenkachse 83 gedreht. Über das Verbindungselement 86 wird der Verstellhebel 63 gedreht und damit eine Verstellung der Dämpfungswirkung in der später geschilderten Weise ermöglicht.

An dem freien Ende des zweiten Hebelarms 85, das dem Scheitel des Schwenkhebels 82 gegenüberliegend angeordnet ist, ist ein Zugelement in Form eines Bowdenzugs angelenkt. Die Hülle des Zugelements ist in einer dafür vorgesehenen Halterung 88 an der Montageplatte 81 festgelegt. An einem gegenüberliegenden, der Montageplatte 81 abgewandten Ende, ist das Zugelement an einem Verstellaktor 89 angelenkt. Gemäß dem gezeigten Ausführungsbeispiel ist der Verstellaktor 89 durch eine Motor-/Getriebeeinheit 90 ausgeführt, an deren Abtriebswelle ein Exzenterelement 91 angelenkt ist.

Das Zugelement ist eine Kraftübertragungsvorrichtung.

Ein wesentlicher Vorteil dieses Ausführungsbeispiel besteht darin, dass der Dämpfer und insbesondere die Verstellung der Dämpfungswirkung unkompliziert, insbesondere mittels bekannter Komponenten, gewährleistet werden kann. Der Dämpfer kann insbesondere unkompliziert nachgerüstet werden. Der Bowdenzug 87 kann insbesondere unter Beachtung der einzuhaltenden Biegeradien im Wesentlichen frei angeordnet werden. Insbesondere ist es denkbar, den Bowdenzug platzsparend in dem zur Verfügung stehenden Bauraum anzuordnen. Es ergeben sich zusätzliche Freiheitsgrade bei der Anordnung des Bowdenzugs. Der Bowdenzug ist Teil einer Kraftübertragungsvorrichtung, die zum Übertragen der vom Verstellaktor 89 bereitgestellten Stellkraft dient. Der Verstellaktor 89 ist außerhalb und beabstandet vom Gehäuse 4 des Dämpfers 1 angeordnet.

Die Kolbenstangen-Hülse 48 weist an einem ersten, im inneren Gehäuse 8 angeordneten Kolbenstangen-Ende 50 einen reduzierten Außendurchmesser auf, wodurch ein Kolbenstangen-Anschlag 51 ausgebildet ist. Auf der Kolbenstangen-Hülse 48 sind im Bereich des ersten Kolbenstangen-Endes 50 ausgehend vom Kolbenstangen-Anschlag 51 eine erste Distanzscheibe 52, ein erstes Verschluss-Element 53, insbesondere in Form einer Tellerfeder, eine Kolbenscheibe 54, ein zweites Verschluss-Element 55, insbesondere in Form einer Tellerfeder, eine zweite Distanzscheibe 56 und eine Sicherungsmutter 57 angeordnet. Die Sicherungsmutter 57 ist auf ein Kolbenstangen-Gewinde aufgeschraubt und sichert den Kolben 13 auf der Kolbenstange 12. Der Kolben 13 wird durch das erste Verschluss-Element 53, die Kolbenscheibe 54, das zweite Verschluss-Element 55 und eine Kolben-Dichtung 58 gebildet. Die Kolben-Dichtung 58 ist ringförmig ausgebildet und in einer Ringnut 59 in der Kolbenscheibe 54 angeordnet. Die Kolben-Dichtung 58 dichtet die Kolbenscheibe 54 somit gegen das innere Gehäuse 8 ab.

In der Kolbenscheibe 54 sind mehrere Durchströmkanäle 60 vorgesehen. Die Durchströmkanäle 60 bilden eine Durchström-Verbindung zwischen dem ersten Teil-Arbeitsraum 17 und dem zweiten Teil-Arbeitsraum 19. Die Verschluss-Elemente 53, 55 wirken jeweils mit mindestens einem der Durchströmkanäle 60 zusammen. Sie können auch mit mehreren der Durchströmkanäle 60 zusammenwirken. Sie können insbesondere als Ventil-Element wirken und den effizienten Strömungsquerschnitt der Durchströmkanäle 60 in Abhängigkeit einer Bewegungsrichtung und/oder -geschwindigkeit des Kolbens 13 bezüglich der Ausschub-Richtung 40 beeinflussen. Sie können insbesondere derart ausgebildet sein, dass ausschließlich eine unidirektionale Strömung durch die Durchströmkanäle 60 möglich ist. In diesem Fall bilden die Verschluss-Elemente 53, 55 ein Einweg-ventil. Die Verschluss-Elemente 53, 55 können insbesondere derart ausgebildet sein, dass sie bei Überschreiten einer bestimmten Grenzkraft öffnen. Sie bilden in diesem Fall einen Überlast-Schutz.

Eine alternative Ausführung des Kolbens 13 ist denkbar. Diesbezüglich sowie für weitere Details bezüglich des Durchströmkanals 60 und der Verschluss-Elemente 53, 55 sei auf die Beschreibung der DE 10 2005 023 756 A1, insbesondere Abs. [0023]f., verwiesen. Es ist insbesondere auch möglich, den Kolben 13 dicht, das heißt ohne Durchströmkanäle 60 auszubilden. In diesem Fall sind die Teil-Arbeitsräume 17, 19 fluiddicht durch den Kolben 13 getrennt. Der Durchströmkanal 71 in der Kolbenstange 12 bildet in diesem Fall die einzige direkte Durchström-Verbindung zwischen den Teil-Arbeitsräumen 17, 19.

Im Folgenden wird die Verstellbarkeit des effektiven Strömungs-Querschnitts des Durchströmkanals 71 mittels des das Verstellelement bildenden End-Bereichs 69 des Kolbenstangen-Kerns 49 beschrieben. Das Verstellelement ist durch eine Verlagerung bezüglich der Längsachse 7, insbesondere durch Verdrehen betätigbar. Es ist ebenso denkbar, ein durch Verschieben bezüglich der Längsachse 7 betätigbares Verstellelement vorzusehen. Das Verstellelement ist insbesondere mittels des Verstellhebels 63 betätigbar. In einer ersten Verstellposition deckt der End-Bereich 69 des Kolbenstangen-Kerns 49 keine der Bohrungen 72 ab. Beide Bohrungen 72 tragen somit zum effektiven Strömungs-Querschnitt des Durchströmkanals 71 bei. Der Durchströmkanal 71 weist mit anderen Worten seinen größtmöglichen effektiven Strömungs-Querschnitt auf. Die Dämpfung einer Bewegung der Kolbenstange 12 ist minimal, das heißt der Widerstand gegen eine derartige Bewegung in oder gegen Ausschub-Richtung 40 so klein wie möglich. Der Dämpfer 1 weist in dieser Verstellposition seine weichest mögliche Dämpfung auf.

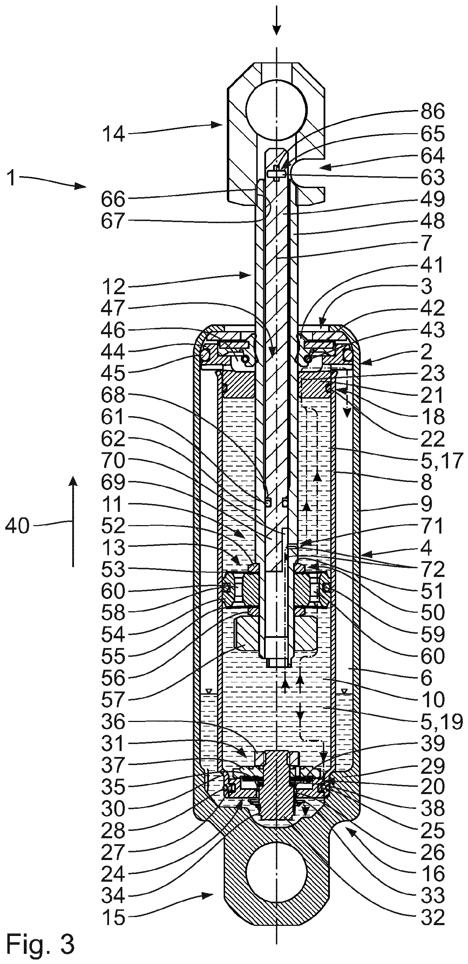

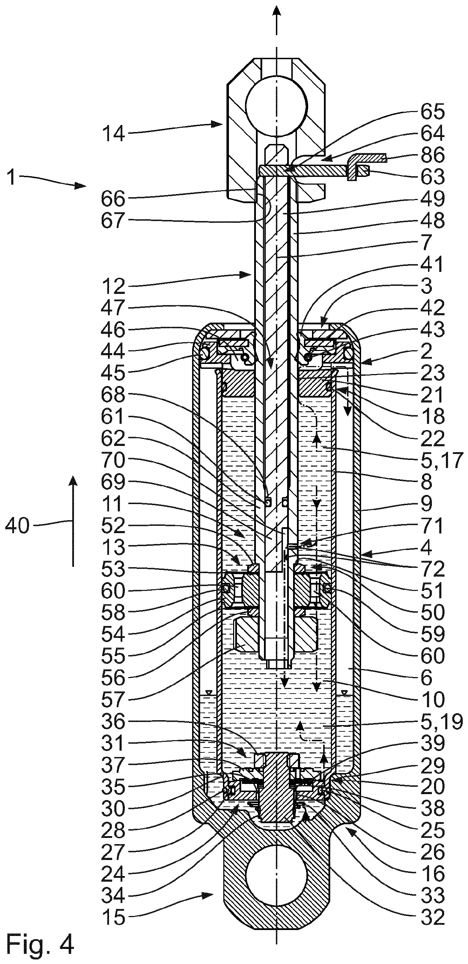

In einer weiteren Verstellposition deckt der End-Bereich 69 des Kolbenstangen-Kerns 49 eine der Bohrungen 72 ab, während die andere offen bleibt. Hierdurch wird der effektive Strömungs-Querschnitt im Vergleich zu der in den Fig. 3 und 4 dargestellten Verstellposition auf die Hälfte verringert. Die Dämpfung des Dämpfers 1 ist somit härter.

In einer weiteren Verstellposition deckt der End-Bereich 69 des Kolbenstangen-Kerns 49 beide, das heißt sämtliche Bohrungen 72 ab. Der Durchströmkanal 71 ist in dieser Stellung verschlossen. Sein effektiver Strömungs-Querschnitt ist Null. Die Durchström-Verbindung zwischen den Teil-Arbeitsräumen 17, 19 durch diesen Durchströmkanal 71 ist unterbrochen. Eine Durchström-Verbindung für das Dämpfungsfluid 10 zwischen den Teil-Arbeitsräumen 17, 19 ist allenfalls über die Ausgleichskanäle 23, 26 und den Ausgleichsraum 6 gegeben. Die Dämpfung einer Bewegung der Kolbenstange 12 ist in dieser Verstellposition maximal, das heißt der Widerstand gegen eine Bewegung der Kolbenstange 12 in oder gegen Ausschub-Richtung 40 ist so groß wie möglich. Der Dämpfer 1 weist in dieser Verstellposition seine härtest mögliche Dämpfung auf. Er kann insbesondere blockiert sein.

Bezüglich der Ausführung der Kolbenstange 12 mit dem Kolbenstangen-Kern 49 und der Kolbenstangen-Hülse 48 sowie auf deren Funktion zum Verstellen der Verstelleinheit wird auf die DE 10 2010 029 180 A1 verwiesen. Wesentlich ist, dass der Verstellhebel 63, mittels dem das Verstellelement 49 bezüglich der Längsachse 7 in der Kolbenstange 12 gedreht wird, über die Kraftübertragungsvorrichtung 87 und den Verstellaktor 89 automatisiert und insbesondere gesteuert betätigbar ist.

Im Folgenden wird die Funktion des Dämpfers 1 beschrieben. In der in den Fig. 3 und 4 dargestellten Verstellposition des Verstellelements ist der Durchströmkanal 71 in der Kolbenstange 12 maximal geöffnet. Bei einer Bewegung des Kolbens 13 gegen die Ausschub-Richtung 40 kann das Dämpfungsfluid 10 somit vom zweiten Teil-Arbeitsraum 19 durch den Durchströmkanal 71 in der Kolbenstange 12 in den ersten Teil-Arbeitsraum 17 strömen. Außerdem kann das durch das zusätzliche Volumen der Kolbenstange 12 aus dem Arbeitsraum 5 verdrängte Dämpfungsfluid 10 durch den ersten Ausgleichskanal 23 in den Ausgleichsraum 6 strömen.

Es ist vorgesehen, dass der zweite Ausgleichskanal 26 bei kleinen, gegen die Ausschub-Richtung 40 gerichteten Kräften auf die Kolbenstange 12, insbesondere bei kleinen Geschwindigkeiten des Kolbens 13 gegen die Ausschub-Richtung 40 soweit wie möglich geschlossen ist. Bei einem Ausgleichs-Ventil 31, welches eine bidirektionale Strömung durch den zweiten Ausgleichskanal 26 ermöglicht, ist das Ausgleichs-Ventil 31 nicht vollständig geschlossen. Aufgrund der Prägungen ist stets eine bidirektionale Strömung durch den zweiten Ausgleichskanal 26 möglich. Prinzipiell ist es jedoch auch möglich, das Ausgleichs-Ventil 31 als Einweg-Ventil auszubilden, welches sich bei kleinen, gegen die Ausschub-Richtung 40 gerichteten Kräften auf die Kolbenstange 12 in einer Sperr-Stellung befindet. Das Ansprech-Verhalten des Ausgleichs-Ventils 31 wird durch eine geeignete Auswahl und Einstellung der Ventil-Schraubenfeder 33 und der Ventil-Tellerfeder 38 bestimmt.

Entsprechend kann der Durchströmkanal 60 im Kolben 13 bei kleinen Geschwindigkeiten des Kolbens 13 durch das erste und/oder zweite Verschluss-Element 53, 55 verschlossen sein.

Bei einer Bewegung des Kolbens 13 in Ausschub-Richtung 40 kann das Dämpfungsfluid 10 vom ersten Teil-Arbeitsraum 17 durch den Durchströmkanal 71 in der Kolbenstange 12 in den zweiten Teil-Arbeitsraum 19 strömen. Außerdem öffnet das Ausgleichs-Ventil 31 und ermöglicht ein Durchströmen von Dämpfungsfluid 10 aus dem Ausgleichsraum 6 durch den zweiten Ausgleichskanal 26 in den zweiten Teil-Arbeitsraum 19. Hierdurch wird sichergestellt, dass der Arbeitsraum 5 abgesehen von dem durch die Kolben-Einrichtung 11 verdrängten Volumen stets vollständig mit Dämpfungsfluid 10 gefüllt ist.

Das Ausgleichs-Ventil 31 im zweiten Abschluss-Element 24 und/oder die Verschluss-Elemente 53, 55 im Kolben 13 können derart ausgebildet sein, dass bei einer Bewegung der Kolbenstange 12 in Ausschub-Richtung 40 ein Durchströmen von Dämpfungsfluid 10 durch den zweiten Ausgleichskanal 26 im zweiten Abschluss-Element 24 und/oder den Durchströmkanal 60 im Kolben 13 nur bei einer großen Ausschub-Geschwindigkeit der Kolbenstange 12 oder einer großen Kraft in Ausschub-Richtung 40 auf diese stattfindet.

Der Durchströmkanal 60 im Kolben 13 und/oder das Ausgleichs-Ventil 31 im zweiten Abschluss-Element 24 wirken somit als Überlastschutz, welcher bei großen Geschwindigkeiten und/oder Kräften auf die Kolbenstange 12 auslöst und dadurch eine Beschädigung des Dämpfers 1 verhindert. Selbstverständlich lässt sich das Dämpfungsverhalten des Dämpfers 1 durch geeignete Auswahl der Verschluss-Elemente 53, 55 des Durchströmkanals 60 und/oder der Ventil-Elemente 33, 38 des Ausgleichs-Ventils 31 je nach Bedarf beeinflussen.

Durch ein Verdrehen des Kolbenstangen-Kerns 49 um die Längsachse 7 mittels des Verstellhebels 63 lassen sich die Bohrungen 72 des Durchströmkanals 71 in der Kolbenstange 12 vom End-Bereich 69 des Kolbenstangen-Kerns 49 verschließen. Hierdurch wird der effektive Strömungs-Querschnitt des Durchströmkanals 71 in der Kolbenstange 12 verringert, insbesondere verschlossen, insbesondere vollständig verschlossen. Ein Durchströmen von Dämpfungsfluid 10 aus dem ersten Teil-Arbeitsraum 17 durch den Durchströmkanal 71 in den zweiten Teil-Arbeitsraum 19 oder umgekehrt, ist dann nicht mehr möglich.

Insofern das Ausgleichs-Ventil 31 ein Durchströmen von Dämpfungsfluid 10 aus dem zweiten Teil-Arbeitsraum 19 in den Ausgleichsraum 6 verhindert, ist die Kolbenstange 12 ist in dieser Stellung des durch den Kolbenstangen-Kern 49, insbesondere dessen End-Bereich 69, gebildeten Verstellelements aufgrund des vollständig abgeschlossenen Volumens des zweiten Teil-Arbeitsraums 19 gegen eine Verschiebung gegen die Ausschub-Richtung 40 blockiert.

Übersteigt die Kraft auf die Kolbenstange 12 in Richtung gegen die Ausschub-Richtung 40 jedoch eine vorbestimmten Grenzkraft, wird der Überlastschutz aktiviert und der Durchströmkanal 60 im Kolben 13 und/oder der zweite Ausgleichskanal 26 im zweiten Abschluss-Element 24 geöffnet.

Da das Ausgleichs-Ventil 31 im zweiten Abschluss-Element 24 bei einer Bewegung des Kolbens 13 in Ausschub-Richtung 40 öffnet, um ein Durchströmen von Dämpfungsfluid 10 aus dem Ausgleichsraum 6 in den zweiten Teil-Arbeitsraum 19 zu ermöglichen, und der erste Ausgleichskanal 23 im ersten Abschluss-Element 21 geschlossen ist, ist der Dämpfer 1 auch im Falle eines verschlossenen Durchströmkanals 71 in der Kolbenstange 12 nicht vollständig gegen eine Bewegung der Kolbenstange 12 in Ausschub-Richtung 40 blockiert. Er weist allerdings eine maximal harte Dämpfung auf, da das Dämpfungsfluid 10 nicht durch den Durchströmkanal 71 in der Kolbenstange 12 vom ersten Teil-Arbeitsraum 17 in den zweiten Teil-Arbeitsraum 19 strömen kann, sondern vom ersten Teil-Arbeitsraum 17 in den Ausgleichsraum 6 und vom Ausgleichsraum 6 durch den zweiten Ausgleichskanal 26 in den zweiten Teil-Arbeitsraum 19 strömt. Die Dämpfungscharakteristik wird somit in diesem Fall durch die Ausgleichskanäle 23, 26 sowie insbesondere durch das Ausgleichs-Ventil 31 bestimmt.

In einer alternativen Ausführungsform kann vorgesehen sein, die Verschluss-Elemente 53, 55 derart auszubilden, dass die Durchströmkanäle 60 im Kolben 13 in Abhängigkeit von der Geschwindigkeit der Bewegung der Kolbenstange 12 in Ausschub-Richtung 40 öffnen bzw. schließen. Hierdurch kann eine geschwindigkeitsabhängige Dämpfungs-Kennlinie erreicht werden. Für Details diesbezüglich wird auf die DE 10 2005 023 756 A1, Abs. [0028] ff. verwiesen.

In einer alternativen Ausführung des zweiten Abschluss-Elements 24 gemäß der in Fig. 3 und 4 gezeigten Ausführungsform kann das zweite Abschluss-Element 24 mit einer Anlageschulter 100 stirnseitig an dem inneren Gehäuse 8 axial abgestützt und mit einem Einsteckbund 101 an der inneren Zylindermantelfläche des inneren Gehäuses 8 radial abgestützt sein. Der Einsteckbund 101 ist radial mittels eines Radialfederelements 102 bezüglich der Längsachse 7 vorgespannt, wobei die Vorspannung axial mittels einer Spannmutter 103 an einem Spannbolzen 104 aufgebracht wird. Das innere Gehäuse 8 wird in dem Bereich, in dem der Einsteckbund 101 an der inneren Zylindermantelfläche des inneren Gehäuses 8 anliegt, radial nach außen gegen eine Innenseite des äußeren Gehäuses 9 gepresst und dadurch gehalten.

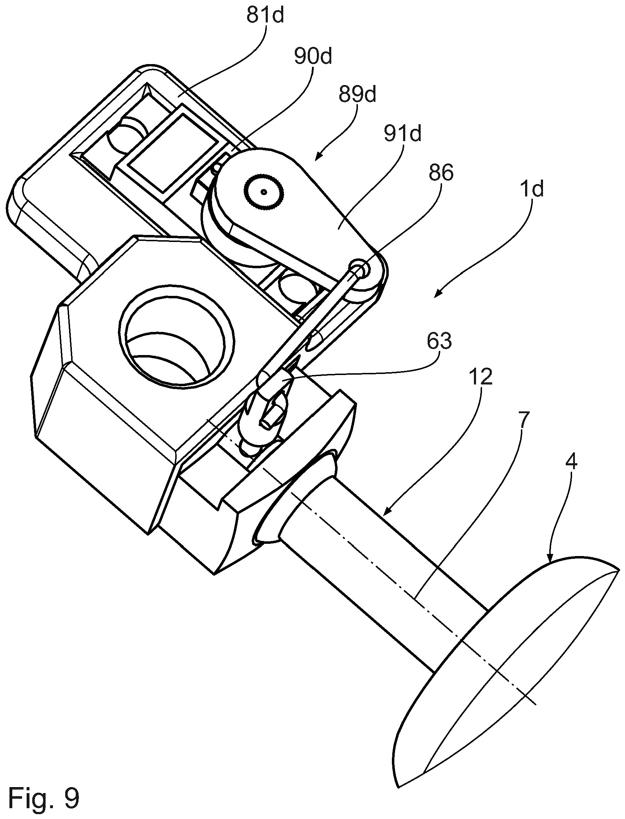

In einer weiteren, nicht dargestellten Ausführungsform kann ein zusätzliches Schaltelement vorgesehen sein, welches in Abhängigkeit der Betätigungsrichtung des Dämpfers 1 mindestens einen der Ausgleichkanäle 23, 26 oder beide Ausgleichskanäle 23, 26 verschließt. Ein derartiges Schaltelement ist aus der DE 10 2010 029 180 A1 bekannt, worauf hiermit, insbesondere bezüglich Fig. 9 der DE 10 2010 029 180 A1, verwiesen wird.

Im Falle einer Unterbrechung der Stromversorgung gewährleistet die Positionserkennungseinheit 107 ein Reset der Positionserkennung mittels einer Referenzfahrt. Dazu dient insbesondere eine Referenzmarke, die beispielsweise als Anschlagelement ausgeführt sein kann. Es ist gewährleistet, dass nach einer unvorhergesehenen Unterbrechung der Verlagerung des Verstellelements dessen Position eindeutig und unkompliziert feststellbar bzw. festlegbar ist.

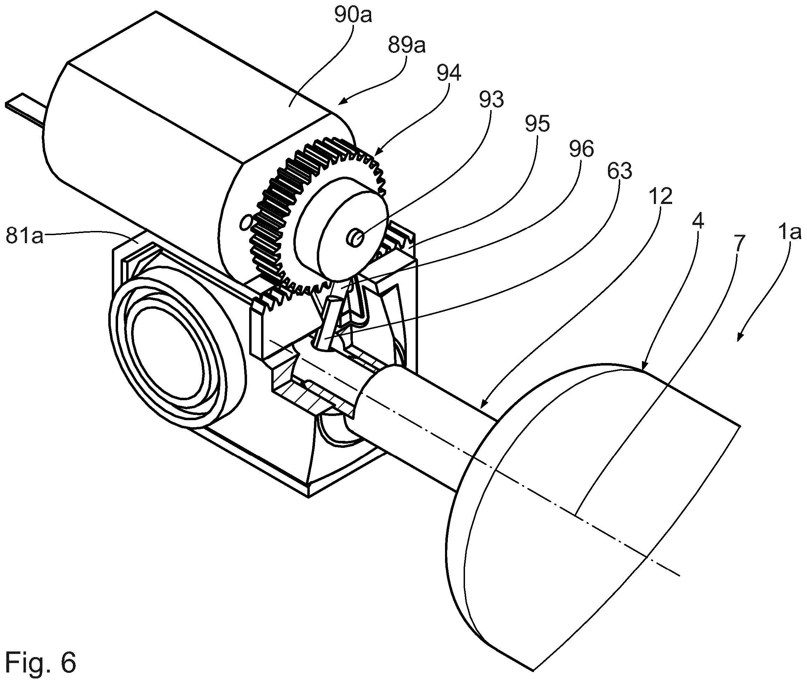

Im Folgenden wird unter Bezugnahme auf die Fig. 6 ein weiteres nicht erfindungsgemäßes Ausführungsbeispiel beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Gemäß dem gezeigten Ausführungsbeispiel ist der Verstellaktor 89a mit einer Motor-/Getriebenheit 90a als Drehantrieb ausgeführt. An einer Abtriebswelle 93 des Elektromotors 90a ist koaxial ein Zahnrad 94 als Teil der Kraftübertragungsvorrichtung angeordnet. Das Zahnrad 94 weist eine Verzahnung auf, die mit einer Gegenverzahnung des Verstellelements in Form einer Zahnstange 95 korrespondiert. Die Zahnstange 95 weist an einer der Gegenverzahnung gegenüberliegenden Unterseite eine im Wesentlichen V-förmige Ausnehmung 96 auf, in der der Verstellhebel 63 angeordnet ist.

Die Kraftübertragungsvorrichtung greift unmittelbar an dem Verstellhebel 63 an. Die Kraftübertragungsvorrichtung, insbesondere die Zahnstange 95 mit der Ausnehmung 96, greift unmittelbar am Verstellhebel 63 an.

Bei dem Ausführungsbeispiel gemäß Fig. 6 ist der Verstellaktor 89a unmittelbar an der Montageplatte 81a befestigt.

Zum Verstellen der Dämpfungswirkung des Dämpfers 1a wird der Verstellaktor 89a betätigt. In Abhängigkeit der Drehrichtung des Elektromotors 90a wird das Zahnrad im Uhrzeigersinn oder im Gegenuhrzeigersinn gedreht und diese Drehbewegung auf die Zahnstange 95 unmittelbar übertragen. Bezogen auf die Längsachse 7 wird die Zahnstange 95 senkrecht dazu verlagert. Durch die Querverlagerung der Zahnstange 95 wird der in der Ausnehmung 96 angeordnete Verstellhebel 63 mitbewegt und damit die Verstellung der Dämpfungswirkung in der zuvor beschriebenen Weise bewirkt.

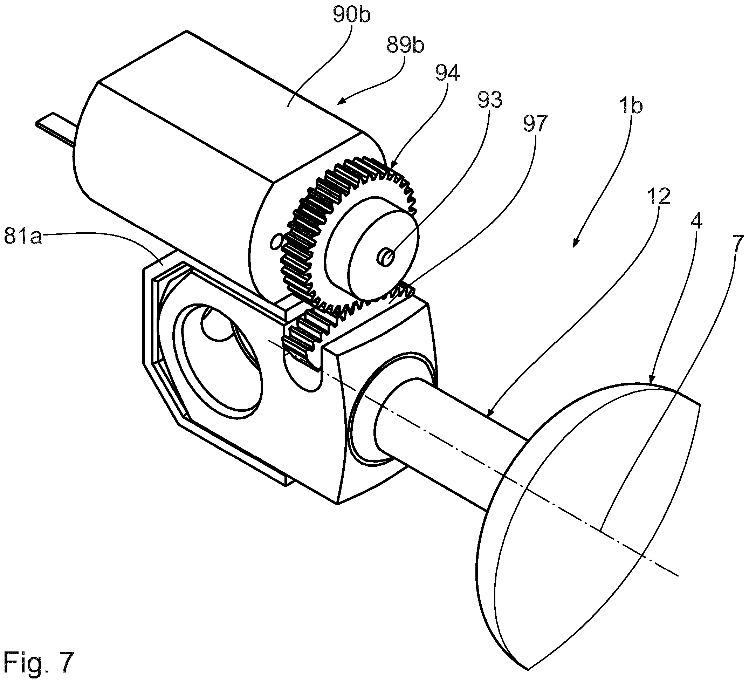

Im Folgenden wird unter Bezugnahme auf die Fig. 7 ein Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber dem vorherigen Ausführungsbeispiel besteht darin, dass bei dem Dämpfer 1b die Gegenverzahnung der Kraftübertragungsvorrichtung an einem Gegenzahnrad 97 ausgeführt ist. Das Gegenzahnrad 97 ist insbesondere in Form eines Zahnradsegments ausgeführt mit einem Öffnungswinkelbereich bezogen auf die Längsachse 7 von etwa 90 °. Ein derartiger Öffnungswinkelbereich ist ausreichend, um die erforderliche Verdrehung des Kolbenstangen-Kerns 49 in der Kolbenstangen-Hülse 48 zu ermöglichen. Die Ausführung des Gegenzahnrads 97 als Zahnradsegment ist platzsparend. Das Gegenzahnrad 97 ist drehfest mit dem Kolbenstangen-Kern 49 verbunden. Insbesondere ist die Drehachse des Gegenzahnrads 97 identisch mit der Längsachse 7 der Kolbenstange 12.

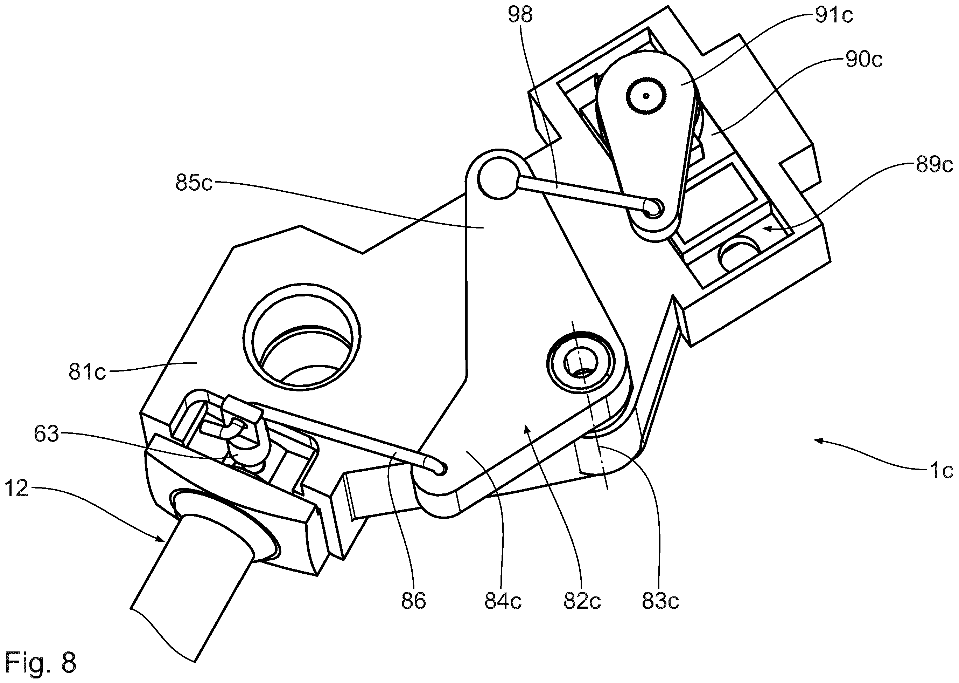

Die Kopplung der Gegenverzahnung mit dem Verstellelement ist dadurch besonders robust ausgeführt. Ein separater Verstellhebel ist entbehrlich. Im Folgenden wird unter Bezugnahme auf die Fig. 8 ein weiteres nicht erfindungsgemäßes Ausführungsbeispiel beschrieben. Identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c.

Die Ausführungsform entspricht im Wesentlichen der ersten Ausführungsform gemäß Fig. 1, wobei anstelle des Bowdenzugs am zweiten Hebelarm 85c des Schwenkhebels 82c ein zweites Verbindungselement 98 schwenkbar angelenkt ist. Mit einem freien, dem Schwenkhebel 82c abgewandten Ende ist das zweite Verbindungselement 98 unmittelbar an einem Exzenterelement 91c an einer Motor-/Getriebeeinheit 90c angelenkt.

Gemäß dem gezeigten Ausführungsbeispiel ist es möglich, den Verstellaktor 89c unmittelbar an der Montageplatte 81c anzubringen. Der erforderliche Bauraum ist reduziert. Die gezeigte Ausführungsform ist unkompliziert und unmittelbar bei dem Dämpfer 1c nachrüstbar, indem der Bowdenzug durch das zweite Verbindungselement 98 und dem Verstellaktor 89c ersetzt wird.

Im Folgenden wird unter Bezugnahme auf die Fig. 9 ein weiteres nicht erfindungsgemäßes Ausführungsbeispiel beschrieben. Identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten d.

Das gezeigte Ausführungsbeispiel entspricht im Wesentlichen dem Ausführungsbeispiel gemäß Fig. 8, wobei der Exzenterhebel 91d über das Verbindungselement 86 unmittelbar am Verstellhebel 63 angreift. Der Schwenkhebel ist dadurch entbehrlich. Die Anzahl der Komponenten und insbesondere der erforderliche Bauraum für den Dämpfer 1d sind reduziert.

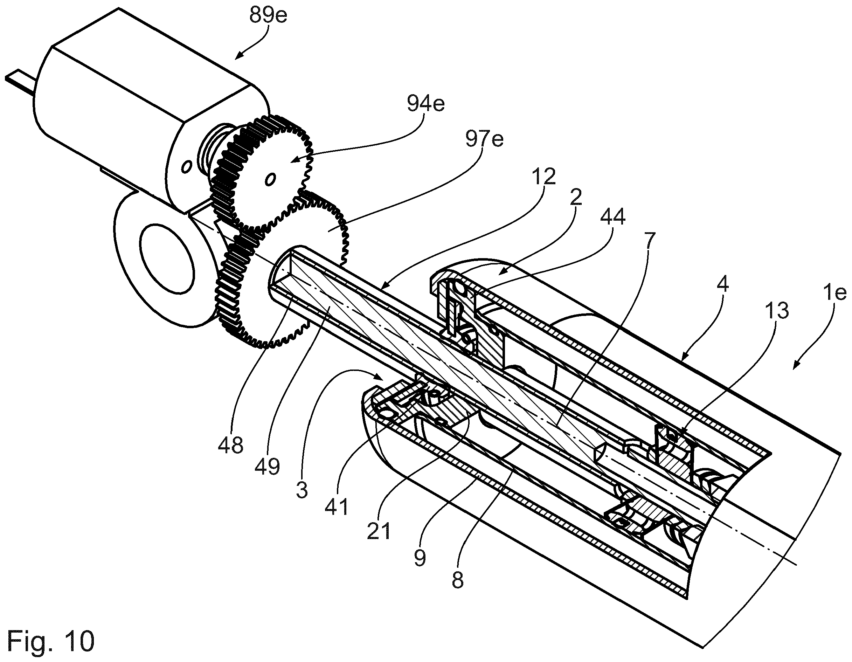

Im Folgenden wird unter Bezugnahme auf die Fig. 10 ein weiteres Ausführungsbeispiel der Erfindung beschrieben. Identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten e.

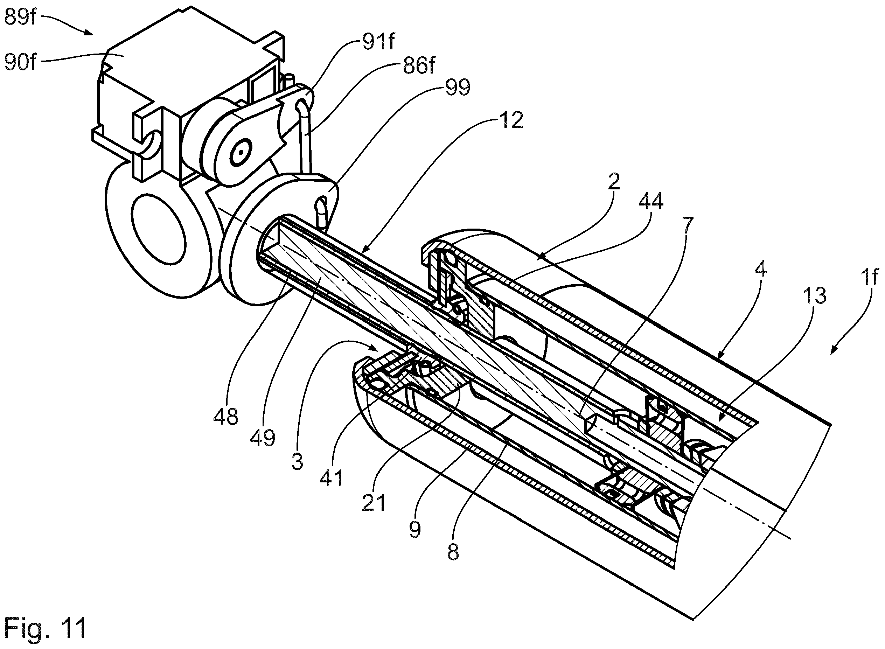

Diese Ausführungsform entspricht im Wesentlichen der Ausführung mit Zahnrad und Gegenzahnradelement gemäß Fig. 7. Der wesentliche Unterschied gemäß dem gezeigten Ausführungsbeispiel besteht darin, dass das Gegenzahnrad 97e nicht mit dem Kolbenstangen-Kern 49, also dem Verstellelement, sondern mit der Kolbenstangen-Hülse 48 der Kolbenstange 12 unmittelbar gekoppelt ist. Die Stellkraft des Verstellaktor 89e bewirkt über das Zahnrad 94e und das Gegenzahnrad 97e eine unmittelbare Verstellung der Kolbenstange 12 bezüglich der Längsachse 7. Bei dem Dämpfer 1e ist der Kolbenstangen-Kern 49 feststehend ausgeführt, wobei sich die Kolbenstangen-Hülse 48 bezüglich der Längsachse 7 um den Kolbenstangen-Kern 49 drehen kann. Zusätzliche Kraftübertragungselemente sind entbehrlich, da die Stellbewegung vom Verstellaktor 89e unmittelbar übertragen wird. Im Folgenden wird unter Bezugnahme auf die Fig. 11 ein weiteres nicht erfindungsgemäßes Ausführungsbeispiel beschrieben. Identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten f.

Der Dämpfer 1f gemäß Fig. 11 entspricht im Wesentlichen dem gemäß Fig. 10, wobei der Verstellaktor 89f als Motor-/Getriebenheit 90f und daran angelenkten Exzenterhebel 91f ausgeführt ist. Der Exzenterhebel 91f ist mittels des Verbindungselements 86f mit einer Exzenterscheibe 99 verbunden. Das Verbindungselement 86f ist an der Exzenterscheibe 99 bezüglich der Längsachse 7 exzentrisch angelenkt. Eine Verlagerung des Exzenterelements 91f bewirkt eine exzentrische Kraftübertragung über das Verbindungselement 86f auf die Exzenterscheibe 99. Die Exzenterscheibe 99 ist drehfest mit der Kolbenstange 12 verbunden. Durch eine Betätigung des Verstellaktor 89f wird wie im vorherigen Ausführungsbeispiel die Kolbenstange 12 gegenüber der Längsachse 7 gedreht.

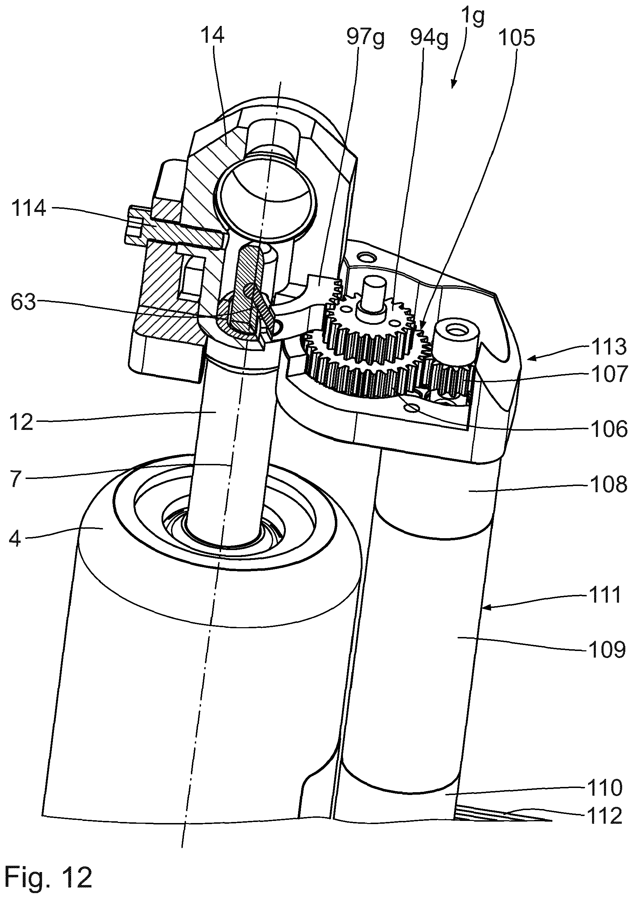

Im Folgenden wird unter Bezugnahme auf Fig. 12 ein weiteres Ausführungsbeispiel der Erfindung beschrieben. Identische Teile erhalten dieselben Bezugszeichen wie bei dem ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten g.

Bei dem Dämpfer 1g gemäß Fig. 12 ist der Verstellhebel 63 in einer Öffnung des Gegenzahnrades 97g aufgenommen. Das Gegenzahnrad 97g wirkt mit dem Zahnrad 94g zusammen, um eine Verdrehung des Verstellhebels 63 bezüglich der Längsachse 7 des Dämpfers 1g zu ermöglichen. Das Zahnrad 94g überträgt die Drehbewegung eines koaxial angeordneten Antriebszahnrads 106 einer Untersetzungs-Getriebestufe 105. Die Untersetzungs-Getriebestufe 105 umfasst ein Getrieberitzel 107, das an einer Abtriebswelle eines Getriebes 108 angeordnet ist.

Das Getriebe 108 ist koaxial zu einem Motor, insbesondere einem Elektromotor 109, angeordnet, an dem ein Encoder 110 vorgesehen ist. Der Encoder 110 ist an einem ersten Ende des Elektromotors 109 angeordnet, das dem zweiten Ende, dem das Getriebe 108 angeordnet ist, gegenüberliegend angeordnet ist. Das Getriebe 108, der Motor 109 und der Encoder 110 können platzsparend in einem zylindrischen Gehäuse 111 entlang der Zylinderlängsachse, die insbesondere parallel zur Längsachse 7 des Dämpfers 1g orientiert ist, angeordnet sein.

An dem Encoder 10 sind Signalübertragungskabel 112 und/oder Stromkabel zur Signalübertragung bzw. Stromversorgung angeschlossen. Der Motor 109, das Getriebe 108 und der Encoder 110 bilden eine gemeinsame Motor-Getriebe-Einheit, die mittels einer plattenförmigen Befestigungseinheit 113 an dem ersten Befestigungselement 14 mittels einer Schraubverbindung 114 lösbar befestigt ist.

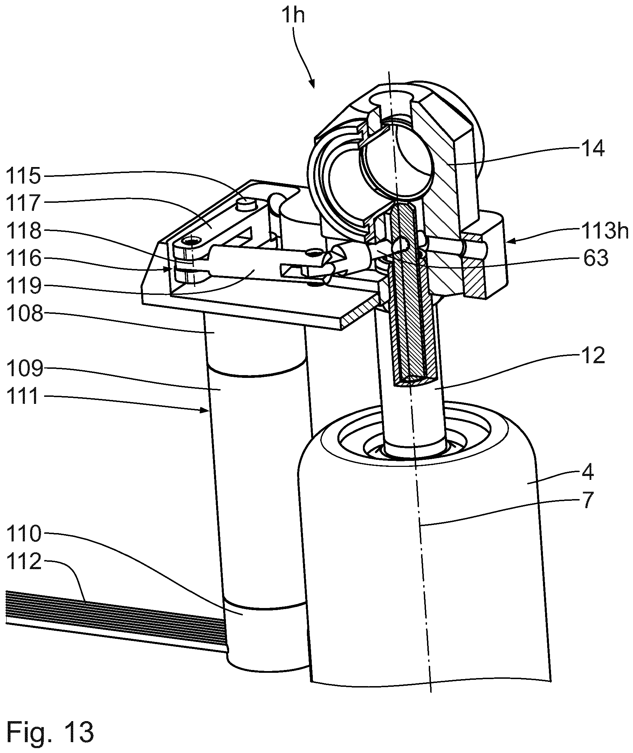

Im Folgenden wird unter Bezugnahme auf die Fig. 13 ein weiteres nicht erfindungsgemäßes Ausführungsbeispiel beschrieben. Identische Teile erhalten dieselben Bezugszeichen wie bei den ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten h.

Der Dämpfer 1h weist eine Motor-/Getriebe-Einheit 108, 109, 110 auf, die in einem Gehäuse 111 untergebracht ist. An der Abtriebswelle 115 des Getriebes 108 ist ein Mehrgelenk-Scharnier 116 angelenkt. Das Mehrgelenk-Scharnier 116 umfasst einen ersten Scharnierhebel 117, der mit seinem ersten Ende schwenkbar an der Abtriebswelle 115 angelenkt ist. An einem gegenüberliegenden Ende ist der erste Scharnierhebel 117 um eine interne Scharnierachse 118 schwenkbar mit einem zweiten Scharnierhebel 119 des Mehrgelenk-Scharniers 116 verbunden.

An einem zweiten, der internen Scharnierachse 118 gegenüberliegenden Ende ist der zweite Scharnierhebel 119 gelenkig mit dem Verstellhebel 63 verbunden. Durch die Betätigung der Motor-/Getriebe-Einheit wird das Mehrgelenk-Scharnier 116 über die Abtriebswelle 115 unmittelbar verschwenkt, woraus sich eine Schwenkbewegung für den Verstellhebel 63 direkt ableiten lässt.

Bei dem Ausführungsbeispiel gemäß Fig. 13 ist die Befestigungseinheit 113h mittels einer nicht dargestellten Schraube einer Schraubenbefestigung an dem ersten Befestigungselement 14 lösbar anordenbar.

## Patentansprüche

1. Dämpfer umfassend
a. ein einen Arbeitsraum (5) aufweisendes Gehäuse (4),
b. in dem Arbeitsraum (5) befindliches Dämpfungsfluid (10),
c. eine im Arbeitsraum (5) angeordnete Kolben-Einheit (11) mit
i. einer eine Längsachse (7) aufweisenden Kolbenstange (12),
ii. einem an der Kolbenstange (12) befestigten Kolben (13), der den Arbeitsraum (5) in einen ersten Teil-Arbeitsraum (17) und in einen zweiten Teil-Arbeitsraum (19) unterteilt,
iii. einem den ersten Teil-Arbeitsraum (17) und den zweiten Teil-Arbeitsraum (19) verbindenden Durchströmkanal (71),
d. eine Verstelleinheit zum Verstellen der Dämpfungskraft des Dämpfers (1; 1a; 1b; 1c; 1d; 1e; 1f) mit
i. einem Verstellelement (48, 49) zum Verstellen der effektiven Strömungsquerschnittsfläche des Durchströmkanals (71),
ii. einem Verstellaktor (89; 89a; 89c; 89f) zum automatisierten Verstellen einer Anordnung des Verstellelements (48, 49) und der Kolbenstange (12),
iii. einer Kraftübertragungsvorrichtung (87) zum Übertragen einer vom Verstellaktor (89; 89a; 89c; 89f) bereitgestellten Stellkraft,
wobei der Verstellaktor (89; 89a; 89c; 89f) außerhalb des Gehäuses (4) angeordnet ist,
wobei die Kraftübertragungsvorrichtung (87) eine Verzahnung aufweist, die mit einer Gegenverzahnung des Verstellelements (48, 49) korrespondiert,
wobei die Gegenverzahnung an einem Gegenzahnrad (97; 97e; 97g) ausgeführt ist, wobei das Gegenzahnrad (97; 97e; 97g) drehfest mit der Kolbenstange (12) verbunden ist,
**dadurch gekennzeichnet, dass**
das Gegenzahnrad (97; 97e; 97g) in Form eines Zahnradsegments mit einem Öffnungswinkelbereich bezogen auf die Längsachse (7) von etwa 90° ausgeführt ist.

2. Dämpfer gemäß Anspruch 1, **gekennzeichnet durch** eine Steuerungseinheit (92), die mit der Verstelleinheit in Signalverbindung steht, zum gesteuerten Verstellen der effektiven Strömungsquerschnittsfläche des Durchströmkanals (71).

3. Dämpfer gemäß einem der vorstehenden Ansprüche, **dadurch gekennzeichnet, dass** das Verstellelement (48, 49) und die Kolbenstange (12) bezüglich der Längsachse (7) relativ zueinander drehbar sind.

4. Dämpfer gemäß einem der vorstehenden Ansprüche, **dadurch gekennzeichnet, dass** das Verstellelement (48, 49) bezüglich der Längsachse (7) drehbar, insbesondere drehantreibbar, ist.

5. Dämpfer gemäß einem der vorstehenden Ansprüche, **dadurch gekennzeichnet, dass** die Kolbenstange (12) bezüglich der Längsachse (7) drehbar, insbesondere drehantreibbar, ist.

6. Dämpfer gemäß einem der vorstehenden Ansprüche, **dadurch gekennzeichnet, dass** das Verstellelement (49) einen Verstellhebel (63) aufweist, der quer, insbesondere radial, zur Längsachse (7) orientiert ist.

7. Dämpfer gemäß Anspruch 6, **dadurch gekennzeichnet, dass** die Kraftübertragungsvorrichtung (87) unmittelbar am Verstellhebel (63) angelenkt ist.

8. Dämpfer gemäß einem der vorstehenden Ansprüche, **dadurch gekennzeichnet, dass** das Gegenzahnrad (97; 97g) drehfest mit einem das Verstellelement bildenden Kolbenstangen-Kern (49) der Kolbenstange (12) verbunden ist.

9. Dämpfer gemäß einem der Ansprüche 1 bis 5, **dadurch gekennzeichnet, dass** das Gegenzahnrad (97e) drehfest mit einer das Verstellelement bildenden Kolbenstangen-Hülse (48) der Kolbenstange (12) verbunden ist.

10. Dämpfer gemäß einem der vorstehenden Ansprüche, **dadurch gekennzeichnet, dass** der Verstellaktor (89; 89a; 89c; 89f) als Drehantrieb, insbesondere als Elektromotor, ausgeführt ist.

11. Dämpfer gemäß einem der vorstehenden Ansprüche, **dadurch gekennzeichnet, dass** die Kraftübertragungsvorrichtung (87) ein Zahnrad aufweist, das insbesondere unmittelbar an der Abtriebswelle (93) des Verstellaktors (89; 89a; 89c; 89f) angeordnet ist.

12. Dämpfer gemäß einem der vorstehenden Ansprüche, **dadurch gekennzeichnet, dass** die Drehachse des Gegenzahnrads (97; 97e; 97g) mit der Längsachse (7) der Kolbenstange (12) identisch ist.

## Claims

1. Damper comprising
a. a housing (4) having a working chamber (5);
b. damping fluid (10) located in the working chamber (5);
c. a piston unit (11) arranged in the working chamber (5), having
i. a piston rod (12) having a longitudinal axis (7),
ii. a piston (13) fastened to the piston rod (12), said piston (13) subdividing the working chamber (5) into a first working chamber part (17) and into a second working chamber part (19),
iii. a through-flow duct (71) connecting the first working chamber part (17) and the second working chamber part (19);
d. an adjusting unit for adjusting the damping force of the damper (1; 1a; 1b; 1c; 1d; 1e; 1f), having
i. an adjusting element (48, 49) for adjusting the effective flow cross-sectional area of the through-flow duct (71),
ii. an adjusting actuator (89; 89a; 89c; 89f) for automatically adjusting an arrangement of the adjusting element (48, 49) and of the piston rod (12),
iii. a force transmission device (87) for transmitting an actuating force provided by the adjusting actuator (89; 89a; 89c; 89f),
wherein the adjusting actuator (89; 89a; 89c; 89f) is arranged outside the housing (4),
wherein the force transmission device (87) has a toothing, which corresponds to a counterpart toothing on the adjusting element (48, 49), wherein the counterpart toothing is embodied on a counterpart gear wheel (97; 97e; 97g), wherein the counterpart gear wheel (97; 97e; 97g) is connected to the piston rod (12) for conjoint rotation,
**characterized in that**
the counterpart gearwheel (97; 97e; 97g) is embodied in the form of a gear wheel segment with an opening angle range of about 90° with respect to the longitudinal axis (7).

2. Damper according to Claim 1, **characterized by** a control unit (92) which has a signal link to the adjusting unit, for the controlled adjustment of the effective flow cross-sectional area of the through-flow duct (71).

3. Damper according to either of the preceding claims, **characterized in that** the adjusting element (48, 49) and the piston rod (12) are rotatable about the longitudinal axis (7) relative to one another.

4. Damper according to one of the preceding claims, **characterized in that** the adjusting element (48, 49) is rotatable, in particular drivable in rotation, about the longitudinal axis (7).

5. Damper according to one of the preceding claims, **characterized in that** the piston rod (12) is rotatable, in particular drivable in rotation, about the longitudinal axis (7).

6. Damper according to one of the preceding claims, **characterized in that** the adjusting element (49) has an adjusting lever (63) which is oriented transversely, in particular radially, with respect to the longitudinal axis (7).

7. Damper according to Claim 6, **characterized in that** the force transmission device (87) is articulated directly to the adjusting lever (63).

8. Damper according to one of the preceding claims, **characterized in that** the counterpart gear wheel (97; 97g) is connected to a piston rod core (49), forming the adjusting element, of the piston rod (12) for conjoint rotation.

9. Damper according to one of Claims 1 to 5, **characterized in that** the counterpart gear wheel (97e) is connected to a piston rod sleeve (48), forming the adjusting element, of the piston rod (12) for conjoint rotation.

10. Damper according to one of the preceding claims, **characterized in that** the adjusting actuator (89; 89a; 89c; 89f) is embodied as a rotary drive, in particular as an electric motor.

11. Damper according to one of the preceding claims, **characterized in that** the force transmission device (87) has a gear wheel which is arranged in particular directly on the output shaft (93) of the adjusting actuator (89; 89a; 89c; 89f).

12. Damper according to one of the preceding claims, **characterized in that,** the axis of rotation of the counterpart gear wheel (97; 97e; 97g) is identical to the longitudinal axis (7) of the piston rod (12).

## Revendications

1. Amortisseur comprenant
a. un boîtier (4) comportant un espace de travail (5),
b. du fluide d'amortissement (10) situé dans l'espace de travail (5),
c. une unité de piston (11) disposée dans l'espace de travail (5) avec
i. une tige de piston (12) ayant un axe longitudinal (7),
ii. un piston (13) qui est fixé à la tige de piston (12) et divise l'espace de travail (5) en un premier espace de travail partiel (17) et un second espace de travail partiel (19),
iii. un canal d'écoulement (71) reliant le premier espace de travail partiel (17) et le second espace de travail partiel (19),
d. une unité de réglage pour régler la force d'amortissement de l'amortisseur (1 ; 1a ; 1b ; 1c ; 1d ; 1e ; 1f) avec
i. un élément de réglage (48, 49) pour régler la section transversale d'écoulement effectif du canal d'écoulement (71),
ii. un actionneur de réglage (89 ; 89a ; 89c ; 89f) pour régler automatiquement un agencement de l'élément de réglage (48, 49) et de la tige de piston (12),
iii. un dispositif de transmission de force (87) pour transmettre une force de positionnement fournie par l'actionneur de réglage (89 ; 89a ; 89c ; 89f),
dans laquelle l'actionneur de réglage (89 ; 89a ; 89c ; 89f) est disposé à l'extérieur du boîtier (4),
le dispositif de transmission de puissance (87) ayant une denture qui correspond à une contre-denture de l'élément de réglage (48, 49),
la contre-denture étant formée sur une contre-roue dentée (97 ; 97e ; 97g), la contre-roue dentée (97 ; 97e ; 97g) étant reliée de manière non rotative à la tige de piston (12), **caractérisée en ce que** la contre-roue dentée (97 ; 97e ; 97g) se présente sous la forme d'un segment de roue dentée avec un angle d'ouverture relatif à l'axe longitudinal (7) de 90° environ.

2. Amortisseur selon la revendication 1, **caractérisé par** une unité de commande (92), qui est en communication par signaux avec l'unité de réglage, pour le réglage contrôlé de la section d'écoulement effectif du canal d'écoulement (71).

3. Amortisseur selon l'une des revendications précédentes, **caractérisé en ce que** l'élément de réglage (48, 49) et la tige de piston (12) sont rotatifs l'un par rapport à l'autre par rapport à l'axe longitudinal (7).

4. Amortisseur selon l'une des revendications précédentes, **caractérisé en ce que** l'élément de réglage (48, 49) est rotatif, en particulier entraîné en rotation, par rapport à l'axe longitudinal (7).

5. Amortisseur selon l'une des revendications précédentes, **caractérisé en ce que** la tige de piston (12) peut tourner par rapport à l'axe longitudinal (7), en particulier est entraînable en rotation.

6. Amortisseur selon l'une des revendications précédentes, **caractérisé en ce que** l'élément de réglage (49) présente un levier de réglage (63) qui est orienté transversalement, en particulier radialement, par rapport à l'axe longitudinal (7).

7. Amortisseur selon la revendication 6, **caractérisé en ce que** le dispositif de transmission de puissance (87) est articulé directement sur le levier de réglage (63).

8. Amortisseur selon l'une des revendications précédentes, **caractérisé en ce que** la contre-roue dentée (97 ; 97g) est reliée de manière non rotative à un noyau de tige de piston (49) de la tige de piston (12) formant l'élément de réglage.

9. Amortisseur selon l'une des revendications 1 à 5, **caractérisé en ce que** la contre-roue dentée (97e) est reliée de manière non rotative à un manchon de tige de piston (48) de la tige de piston (12) formant l'élément de réglage.

10. Amortisseur selon l'une des revendications précédentes, **caractérisé en ce que** l'actionneur de réglage (89 ; 89a ; 89c ; 89f) est conçu comme un entraînement rotatif, en particulier comme un moteur électrique.

11. Amortisseur selon l'une des revendications précédentes, **caractérisé en ce que** le dispositif de transmission de puissance (87) présente une roue dentée qui est disposée notamment directement sur l'arbre de sortie (93) de l'actionneur de réglage (89 ; 89a ; 89c ; 89f).

12. Amortisseur selon l'une des revendications précédentes, **caractérisé en ce que** l'axe de rotation de la contre-roue dentée (97 ; 97e ; 97g) est identique à l'axe longitudinal (7) de la tige (12) du piston.
